# EUROPÄISCHE PATENTSCHRIFT

(11) **EP 2 864 965 B1**
(45) Veröffentlichungstag und Bekanntmachung des Hinweises auf die Patenterteilung: **01.11.2017**
(21) Anmeldenummer: 13709298.7
(22) Anmeldetag: 25.02.2013
(51) Int. Cl.: G06T 17/00, G06T 15/20, G06T 7/00

(54) **VERFAHREN ZUR MODELLBASIERTEN ERSTELLUNG VON TESTDATENSÄTZEN ZUR PRÜFUNG VON BILDVERARBEITUNGSALGORITHMEN**
METHOD FOR THE MODEL-BASED COMPILATION OF TEST DATA SETS FOR EXAMINING IMAGE PROCESSING ALGORITHMS
PROCÉDÉ D'ÉLABORATION, BASÉE SUR UN MODÈLE, DE JEUX DE DONNÉES D'ESSAI POUR LE CONTRÔLE D'ALGORITHMES DE TRAITEMENT D'IMAGE

(30) Priorität: 24.02.2012 AT 2382012
(43) Veröffentlichungstag der Anmeldung: 29.04.2015
(73) Patentinhaber: AIT Austrian Institute of Technology GmbH, 1220 Wien (AT)
(72) Erfinder: HERZNER, Wolfgang, A-1030 Wien (AT); ZENDEL, Oliver, A-1190 Wien (AT)
(74) Vertreter: Wildhack & Jellinek
(86) Internationale Anmeldenummer: PCT/AT2013/050046
(87) Internationale Veröffentlichungsnummer: WO 2013/123545

(56) Entgegenhaltungen:
- RANDY S ROBERTS ET AL: "Design of benchmark imagery for validating facility annotation algorithms", GEOSCIENCE AND REMOTE SENSING SYMPOSIUM (IGARSS), 2011 IEEE INTERNATIONAL, IEEE, 24. Juli 2011 (2011-07-24), Seiten 1453-1456, XP032061138, DOI: 10.1109/IGARSS.2011.6049340 ISBN: 978-1-4577-1003-2
- Jean Nonnemaker, Henry S. Baird: "Using Synthetic Data Safely in Classifcation", Lehigh University, USA , 2009, XP002764186, Gefunden im Internet: URL:http://www.lehigh.edu/~jen2/jeanspaper .pdf [gefunden am 2016-11-11]
- GRIBKOV I V ET AL: "PICASSO - edge detectors evaluation system based on the comprehensive set of artificial images", PROCEEDINGS 6TH WORLD MULTICONFERENCE ON SYSTEMICS, CYBERNETICS AND INFORMATICS : JULY 14 - 18, 2002, ORLANDO, FLORIDA, USA, IIIS, ORLANDO, FL, USA, Bd. 9, 1. Januar 2002 (2002-01-01), Seiten 88-93, XP008182232, ISBN: 978-980-07-8150-0
- GEOFFREY R TAYLOR ET AL: "OVVV: Using Virtual Worlds to Design and Evaluate Surveillance Systems", CVPR '07. IEEE CONFERENCE ON COMPUTER VISION AND PATTERN RECOGNITION; 18-23 JUNE 2007; MINNEAPOLIS, MN, USA, IEEE, PISCATAWAY, NJ, USA, 1. Juni 2007 (2007-06-01), Seiten 1-8, XP031114748, ISBN: 978-1-4244-1179-5
- QUEIROZ R ET AL: "Generating Facial Ground Truth with Synthetic Faces", GRAPHICS, PATTERNS AND IMAGES (SIBGRAPI), 2010 23RD SIBGRAPI CONFERENCE ON, IEEE, 30. August 2010 (2010-08-30), Seiten 25-31, XP031981869, DOI: 10.1109/SIBGRAPI.2010.12 ISBN: 978-1-4244-8420-1
- SEGALL A ET AL: "Advances In The Development Of Imagery Test Suites And Their Implication On The Testability Of Computer Vision Algorithms", INTERNATIONAL SPACE YEAR : SPACE REMOTE SENSING. HOUSTON, MAY 26 - 29, 1992; [PROCEEDINGS OF THE INTERNATIONAL GEOSCIENCE AND REMOTE SENSING SYMPOSIUM (IGARSS)], NEW YORK, IEE, US, 26. Mai 1992 (1992-05-26), Seiten 688-690, XP032303821, DOI: 10.1109/IGARSS.1992.576806 ISBN: 978-0-7803-0138-2
- XIAOYAN HU ET AL: "A Quantitative Evaluation of Confidence Measures for Stereo Vision", IEEE TRANSACTIONS ON PATTERN ANALYSIS AND MACHINE INTELLIGENCE, IEEE COMPUTER SOCIETY, USA, Bd. 34, Nr. 11, 1. November 2012 (2012-11-01), Seiten 2121-2133, XP011490748, ISSN: 0162-8828, DOI: 10.1109/TPAMI.2012.46
- RANDY S ROBERTS ET AL: "Design of benchmark imagery for validating facility annotation algorithms", GEOSCIENCE AND REMOTE SENSING SYMPOSIUM (IGARSS), 2011 IEEE INTERNATIONAL, IEEE, 24 July 2011 (2011-07-24), pages 1453-1456, XP032061138, DOI: 10.1109/IGARSS.2011.6049340 ISBN: 978-1-4577-1003-2
- Jean Nonnemaker, Henry S. Baird: "Using Synthetic Data Safely in Classifcation", Lehigh University, USA , 2009, XP002764186, Retrieved from the Internet: URL:http://www.lehigh.edu/~jen2/jeanspaper .pdf [retrieved on 2016-11-11]
- GRIBKOV I V ET AL: "PICASSO - edge detectors evaluation system based on the comprehensive set of artificial images", PROCEEDINGS 6TH WORLD MULTICONFERENCE ON SYSTEMICS, CYBERNETICS AND INFORMATICS : JULY 14 - 18, 2002, ORLANDO, FLORIDA, USA, IIIS, ORLANDO, FL, USA, vol. 9, 1 January 2002 (2002-01-01), pages 88-93, XP008182232, ISBN: 978-980-07-8150-0

## Beschreibung

Die Erfindung betrifft ein Verfahren zur Prüfung eines Bildverarbeitungsverfahrens mittels künstlich erstellter Testdatensätze.

Die Erfindung wird vorteilhafterweise im Bereich der Analyse von Bildverarbeitungsverfahren eingesetzt, die aus vorliegenden Digitalbildern bestimmte Merkmale extrahieren. Ein erfindungsgemäßes Verfahren wird vorteilhafterweise im Bereich der Qualitätssicherung und Zertifizierung von Bildverarbeitungsverfahren, vor allem in autonomen Systemen, eingesetzt.

Im Stand der Technik besteht das grundsätzliche Problem, Bildverarbeitungsverfahren zu validieren, die für einen bestimmten Anwendungszweck entwickelt worden sind. Es ist üblich, zu diesem Zweck manuell ausgewählte Testfallbilder zu erstellen, die typischerweise vorkommende Bilder enthalten, mit denen das jeweilige Bildverarbeitungsverfahren im Einsatz konfrontiert ist. Als Beispiel wird auf die Veröffentlichungen von GEOFFREY R TAYLOR ET AL: "OVVV: Using Virtual Worlds to Design and Evaluate Surveillance Systems", CVPR '07. IEEE CONFERENCE ON COMPUTER VISION AND PATTERN RECOGNITION und von QUEIROZ R ET AL: "Generating Facial Ground Truth with Synthetic Faces", GRAPHICS, PATTERNS AND IMAGES (SIBGRAPI), 2010 verwiesen. Die Herausforderungen bei der Auswahl und Erstellung von Testbildern werden unter anderem in Roberts et al. " Design of Benchmark Imagery for validating facility annotation algorithms" beschrieben. Dort werden für Luftaufnahmen des Bodens Faktoren aufgezählt, die die erhaltenen Bilder beeinflussen. Um die Robustheit und Fähigkeit eines Bildverarbeitungsverfahrens, welches beispielsweise als Personenzähler oder zur Spurerkennung eines Kraftfahrzeugs eingesetzt ist, zu validieren, wird üblicherweise eine Anzahl von Testbildern bzw, Testbildsequenzen herangezogen, wobei für jedes Testbild händisch ein Vergleichsergebnis oder Soll-Ergebnis vorgegeben wird, welches das jeweilige Bildverarbeitungsverfahren liefern soll.

Die Testbilder werden gemeinsam mit den zu erwartenden Vergleichsergebnissen, die mitunter auch als "Ground Truth" bezeichnet werden, in gemeinsamen Testdatensätzen abgespeichert. Im Zuge der Validierung werden dem zu validierenden Bildverarbeitungsverfahren die abgespeicherten Testbilder zugeführt. Die Ergebnisse des jeweiligen Bildverarbeitungsverfahren werden nach der Verarbeitung mit dem Vergleichsergebnissen verglichen. Ein solcher Vergleich der vom Bildverarbeitungsverfahren gelieferten Ergebnisse mit den Vergleichsergebnissen wird für eine Vielzahl von Testdatensätzen durchgeführt. Auch können verschiedene Bildverarbeitungsverfahren unter Zugrundelegung derselben Testdatensätze überprüft und die Übereinstimmung mit den jeweiligen Vergleichsergebnissen als Maß für die Qualität des jeweiligen Bildverarbeitungsverfahrens herangezogen werden.

Neben der händischen Erstellung von Testdatensätzen besteht auch die Möglichkeit, Testdatensätze automatisch herzustellen. Bei automatisch erzeugten Testdatensätzen besteht jedoch das Problem, eine Anzahl von Testszenarien zu schaffen, die eine möglichst vollständige Überprüfung des jeweiligen Verfahrens gewährleisten. Nonnemaker und Baird verwenden in "Using Synthetic Data Safely in Classification" interpolierte Daten um größere Testdatensätze zu schaffen. Hier wird gezeigt, dass auf diese Weise erhaltene Testdatensätze keine schlechteren Ergebnisse lieferten. Allerdings kann es oftmals gefordert sein, dass kritische Situationen, die lediglich in sehr seltenen Fällen auftreten, besonders intensiv zu überprüfen sind. Bei einer automatischen Erzeugung von Testdatensätzen werden solche kritischen Testdatensätze oftmals nicht berücksichtigt, sodass ein Test basierend auf den automatisch erzeugten Testdatensätzen keine große Aussagekraft über das jeweils verwendete Bildverarbeitungsverfahren hat. Es ist allerdings anzumerken, dass die manuelle Erstellung von Testdaten kritischer Situationen oft nicht möglich ist, da sie mit der Gefährdung menschlichen Lebens oder der öffentlichen Sicherheit einhergehen würde. Automatisierte Ansätze vermeiden dieses Risiko prinzipiell.

Ein weiterer Nachteil bei automatisch generierten Testdatensätzen liegt darin, dass oft redundante Testdatensätze generiert werden, deren Auswertung nur geringe Aussagekraft für das Verhalten des jeweils verwendeten Bildverarbeitungsverfahrens hat. Zudem müsste, um eine vollständige Prüfung aller möglichen Testfälle zu ermöglichen, eine sehr große Anzahl von Datensätzen erzeugt werden, von denen eine Vielzahl weitestgehend idente Anforderungen an das Bildverarbeitungsverfahren stellt, wobei insgesamt lediglich sehr wenige kritische Situationen geprüft werden.

In allen Lebensbereichen wird der Einsatz von autonomen Systemen forciert, um dem Menschen Arbeit zu erleichtern oder Aufgaben zu übernehmen, welche von Menschen nicht oder nur unter großer Gefahr ausgeführt werden können. Ein wichtiger Beitrag kommt hierbei bildverarbeitenden Verfahren zu, welche Aufgaben durch die Analyse von Bildern lösen und die einen wichtigen Anhaltspunkt für die Steuerung der autonomen Systeme bilden. Eine mögliche Anwendung eines Bildverarbeitungsverfahrens ist beispielsweise das Zählen von Personen die einen Bereich betreten, das Identifizieren von potentiell gefährlichen Inhalten in Gepäckstücken oder das automatische Überwachen des Einhaltens einer gewählten Fahrspur.

Ein weiteres Problem besteht darin, ein Bildverarbeitungsverfahren für bestimmte Sicherheitsanforderungen zu zertifizieren. Aufgrund der vorstehend genannten Probleme, insbesondere der enormen Anzahl der potentiell möglichen zu verarbeitenden Bilder ist eine erschöpfende Überprüfung von Bildverarbeitungsverfahren nicht durchführbar.

Aufgabe der Erfindung ist es somit, Testdatensätze mit geringer Redundanz zu generieren, wobei möglichst verschiedenartige Testbilder erzeugt werden, um das Bildverarbeitungsverfahren einer möglichst vollständigen Überprüfung unterziehen zu können. Insbesondere ist es Aufgabe der Erfindung, Testdatensätze zu erstellen, die eine Zertifizierung von Bildverarbeitungsverfahren ermöglichen.

Die Erfindung löst diese Aufgabe bei einem Verfahren der eingangs genannten Art mit den Merkmalen des Patentanspruchs 1.

Erfindungsgemäß ist ein Verfahren zur Erstellung von Testdatensätzen zur Prüfung eines Bildverarbeitungsverfahrens vorgesehen, wobei das zu untersuchende Bildverarbeitungsverfahren zu Ermittlung von Ergebniswerten oder Bedienungswerten aus Digitalbildern ausgearbeitet ist. Erfindungsgemäß ist vorgesehen, dass
- ein Domain-Modell festgelegt wird, mit dem anhand einer Anzahl von vorgebbaren Parametern für eine bestimmte Anwendung typische dreidimensionale Szenen festlegbar sind,
- durch Festlegung von Parametern des Domain-Modells dreidimensionale Szenen erstellt werden, wobei für jede der Szenen die Position und Sehrichtung eines Betrachters in Bezug auf die jeweilige dreidimensionale Szene einen weiteren Parameter darstellt, der gemeinsam mit den übrigen Parametern für die jeweilige Szene festgelegt wird,
- mittels eines Rendering Verfahrens ausgehend von der Position und Ausrichtung des Betrachters ein digitales Abbild jeder Szene erstellt wird,
- aus der Szene, insbesondere aus den die Szene charakterisierenden Parametern, Vergleichswerte ermittelt oder abgeleitet werden, und
- die Vergleichswerte gemeinsam mit den digitalen Abbildern als gemeinsamer Datensatz abgespeichert werden.
Durch diese vorteilhafte Maßnahme ist es möglich, für ein bestimmtes Einsatzgebiet Bildverarbeitungsverfahren mit den erstellten Testdatensätzen testen zu können.

Zur Prüfung eines Sensors mit einem Bildverarbeitungsalgorithmus oder Bildverarbeitungsverfahren kann vorgesehen sein, dass das Bildverarbeitungsverfahren und/oder der Bildverarbeitungsalgorithmus von einem Sensor ausgeführt wird, wobei der Sensor, insbesondere laufend, digitale Abbilder erfasst und dem Bildverarbeitungsverfahren und/oder Bildverarbeitungsalgorithmus als sensor-interne Darstellungen zur Verfügung stellt, und der Sensor Ergebniswerte des Bildverarbeitungsverfahrens und/oder Bildverarbeitungsalgorithmus als Ergebniswerte zur Verfügung stellt.

Der Test eines Bildverarbeitungsverfahrens wird vorteilhafter Weise derart ausgeführt, dass das Bildverarbeitungsverfahren auf die erstellten digitalen Abbilder angewendet wird, wobei das Bildverarbeitungsverfahren aus den digitalen Abbildern eine Anzahl von Ergebniswerten ableitet und die Ergebniswerte mit den gemeinsam mit dem jeweiligen digitalen Abbild abgespeicherten Vergleichswerten verglichen werden, wobei das Bildverarbeitungsverfahren bei Abweichungen zwischen dem Ergebniswert und dem Vergleichswert als fehlerhaft detektiert wird. Insbesondere werden Abweichungen nur dann als fehlerhaft angesehen, wenn die Abweichungen einen vorgegebenen Schwellenwert überschreiten.

Die Übermittlung von Daten an einen Sensor kann vorgenommen werden, indem die digitalen Abbilder mittels einer Testeingabeschnittstelle als Eingabe für das Bildverarbeitungsverfahren und/oder den Bildverarbeitungsalgorithmus übermittelt werden und/oder, dass die digitalen Abbilder, insbesondere bei fehlender Testeingabeschnittstelle, über einen dem Eingabeteil des Sensors zugewandten Bildschirm als Eingabe für das Bildverarbeitungsverfahren und/oder dem Bildverarbeitungsalgorithmus übermittelt werden.

Die Übernahme von Ergebnissen des Sensors kann erfolgen, indem die Ergebniswerte mittels einer Testausgabeschnittstelle zur Verfügung gestellt werden und/oder, dass die Ergebniswerte, insbesondere bei fehlender Testausgabeschnittstelle, mittels eines Umwandlungsverfahrens aus den Ergebnissen des Bildverarbeitungsverfahrens und/oder des Bildverarbeitungsalgorithmus abgeleitet werden, wobei die Ergebnisse über den Ausgabeteil des Sensors für das Umwandlungsverfahren bereitgehalten werden.

Zur vorteilhaften Erstellung von Testbildern kann vorgesehen sein, dass im Zuge der Festlegung der Szene ein Oberflächenmodell der Szene erstellt wird, wobei die Szene durch eine Anzahl von Raumpunkten festgelegt wird, die miteinander durch Oberflächenelemente, insbesondere durch Polygone, vorzugsweise in Form von Dreiecken, verbunden sind.

Zur vorteilhaften Bewertung der Ähnlichkeit von erstellten Testbildern kann vorgesehen sein, dass in der dreidimensionalen Szene enthaltenen Punkte, insbesondere die Eckpunkte der Oberflächenelemente, als Charakterisierungspunkte ausgewählt werden, wobei
- diesen Charakterisierungspunkten vorzugsweise Attribute hinzugefügt werden, die die Art des Gegenstands angeben, auf dem sich der jeweilige Charakterisierungspunkt befindet, und wobei
- ermittelt wird, ob und/oder wo sich die Charakterisierungspunkte im Sichtbereich des Betrachters befinden, und ein Charakterisierungsvektor erstellt wird, der für eine Anzahl von Kategorien jeweils einen Wert enthält, der angibt, wie viele oder welcher Anteil der jeweiligen Kategorie zugewiesenen Charakterisierungspunkte für den Betrachter sichtbar sind.

Zur einfachen Überprüfung eines Bildverarbeitungsverfahrens kann vorgesehen werden, dass zu jedem Abbild jeweils der zugehörige ermittelte Charakterisierungsvektor und der jeweils zugeordnete Vergleichswert abgespeichert wird, und dass insbesondere das Abbild gemeinsam mit dem ihm jeweils zugeordneten Charakterisierungsvektor und dem ihm jeweils zugeordneten Vergleichswert in einem gemeinsamen logischen Datensatz abgespeichert werden, die auf Grundlage derselben Szene ermittelt wurden.

Um die Ähnlichkeit von Abbildern bei der Erstellung von Testdatensätzen besser beurteilen zu können, kann vorgesehen sein, dass zwei in logischen Datensätzen abgespeicherte Abbilder als umso ähnlicher angesehen werden, je geringer die Distanz zwischen den jeweils im gleichen logischen Datensatz befindlichen Charakterisierungsvektoren ist, wobei gegebenenfalls zur Bestimmung der Ähnlichkeit zweier Abbilder eine Distanzmetrik für Charakterisierungsvektoren vorgegeben wird, die vorzugsweise dem euklidischen Abstand der Charakterisierungsvektoren entspricht.

Zur Reduktion einer zu großen Anzahl von logischen Datensätzen sowie zur Verkürzung der Überprüfung eines Bildverarbeitungsverfahrens kann vorgesehen sein, dass aus einer Gruppe von logischen Datensätzen mit ähnlichen Charakterisierungsvektoren derjenige Charakterisierungsvektor ausgewählt wird, dessen Distanz zu den übrigen Charakterisierungsvektoren am geringsten ist und die übrigen Charakterisierungsvektoren verworfen werden.

Um eine große Vielzahl unterschiedlicher Abbilder mit verschiedenen Bildmerkmalen zu erhalten, kann vorgesehen sein, dass auf Grundlage des ermittelten Charakterisierungsvektor die dem Domain-Modell übermittelten Parameter abgeändert werden, um eine hinreichende Abdeckung des Raums der Charakterisierungsvektoren zu erzielen, und
dass die Erstellung einer Szene mit dem abgeänderten Satz von Parametern erneut durchgeführt wird, wobei dieser Vorgang so lange wiederholt wird, bis eine Gleichverteilung der ermittelten Charakterisierungsvektoren im Vektorraum der Charakterisierungsvektoren so erreicht wird, dass jeder weiterer Satz von Parametern zu einem Charakterisierungsvektor führen würde, der von keinem der bisher ausgewählten Charakterisierungsvektoren entsprechend der gewählten Distanzmetrik so weit entfernt ist, dass er gemäß Verfahren nicht verworfen werden würde, wobei die Parameter insbesondere derart gewählt werden, dass für die Zielanwendung kritische Konstellationen oder Kritikalitaten oder Erscheinungen, wie beispielsweise Spiegelungen oder periodische Muster, welche die Ausgabequalität von bildverarbeitenden Verfahren reduzieren können, abgedeckt werden. Hierdurch wird weiters ein möglichst umfassender Test des Bildverarbeitungsverfahrens gewährleistet.

Ein Ausführungsbeispiel der Erfindung soll anhand der vorliegenden Zeichnungen näher dargestellt werden. Dieses Beispiel betrifft die Anwendung der Erfindung auf einen Küchenroboter. Die Erfindung ist selbstverständlich nicht auf diese einzige Anwendung beschränkt, sondern auch ohne weiteres auf andere Szenarien wie etwa den Straßenverkehr, Automatisierungsroboter, Personenzählanlagen usw. angewendet werden.

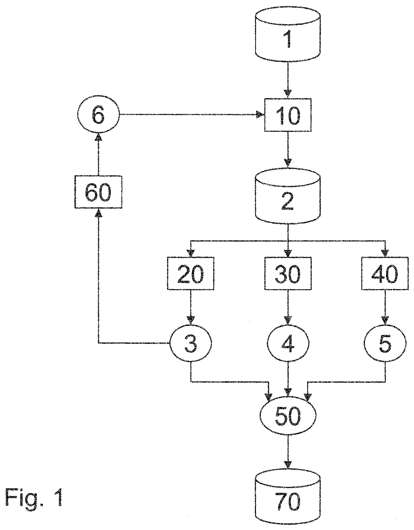

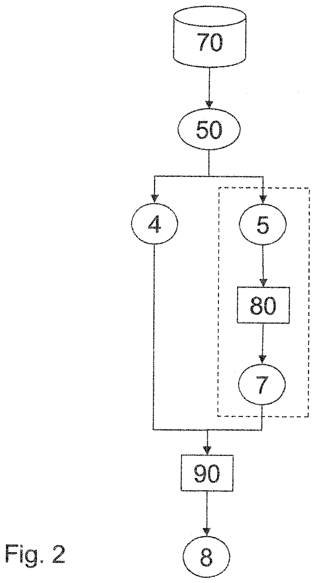

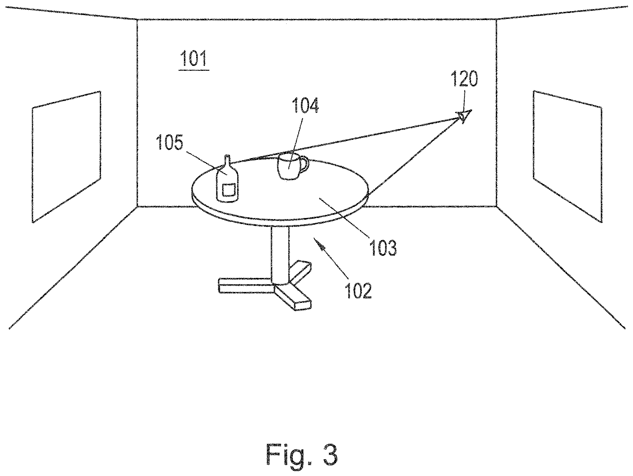

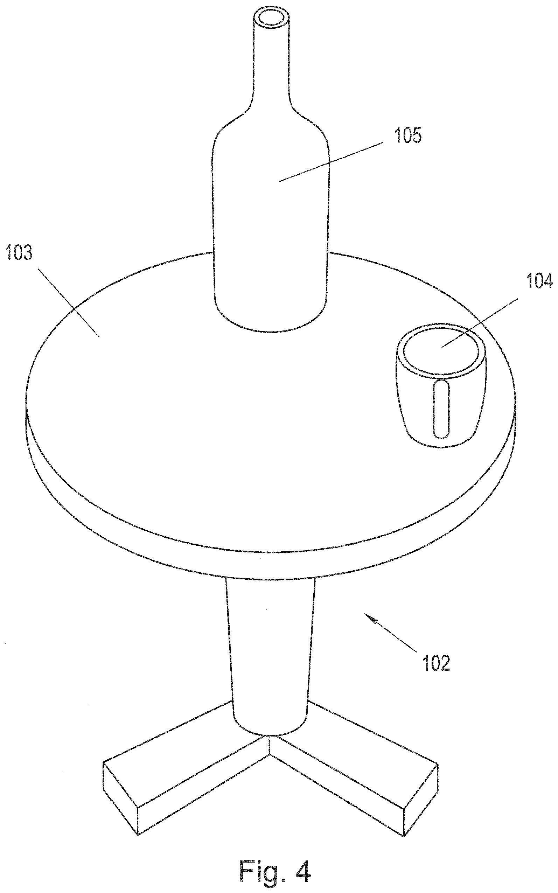

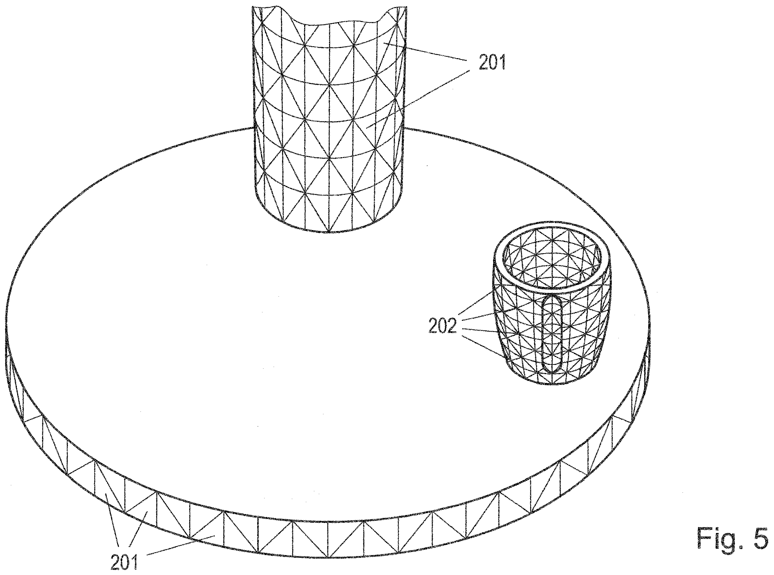

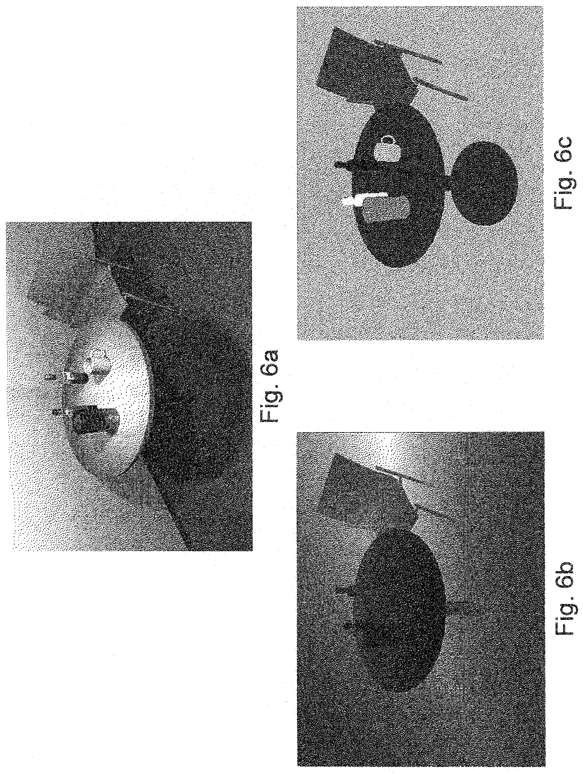

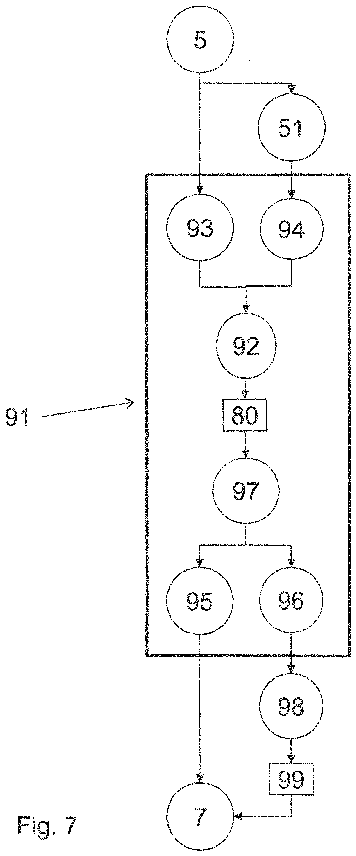

Die **Fig. 1** zeigt schematisch den Ablauf eines besonderen Ausführungsbeispiels der Erfindung. **Fig. 2** zeigt schematisch den Ablauf des Tests des Bildverarbeitungsverfahrens mit den erfindungsgemäß erlangten Datensätzen. **Fig. 3** zeigt eine typische virtuelle dreidimensionale Szene, die mit einem Domain-Modell erstellt worden ist. **Fig. 4** zeigt das Abbild der in **Fig. 3** dargestellten Szene aus dem Blickwinkel des in **Fig. 3** dargestellten Betrachters. **Fig. 5** zeigt einen Ausschnitt des Abbilds aus **Fig. 4** sowie die auf der Oberfläche verteilten Charakterisierungspunkte. **Fig. 6a****-c** zeigen ein Beispiel mit einem Testbild sowie mit daraus abgeleiteten Vergleichswerten. **Fig. 7** zeigt ein alternatives Ausführungsbeispiel der Erfindung, bei dem das Bildverarbeitungsverfahren von einem Sensor ausgeführt wird.

Beim vorliegenden Ausführungsbeispiel sollen Testdatensätze 50 (**Fig. 1**) erstellt werden, mit denen überprüft wird, ob ein Roboter in Küchen mit Hilfe von Farbkamera-Bildern bestimmte Gegenstände 102, 103, 104, 105 erkennen kann. Zu erkennende Objekte, dargestellt in **Fig. 3****,** können beispielsweise Glasflaschen 105, Tassen 104 oder Kücheneinrichtungsgegenstände wie Tische 102 sein. Bei der Durchführung des erfindungsgemäßen Ausführungsbeispiels steht ein Bildverarbeitungsverfahren 80 (**Fig. 2**) zur Verfügung, das auf Grundlage von Kamerabildern, die von einer Kamera des Roboters aufgenommen wurden, die Umgebung dieses Roboters, insbesondere Gegenstände 102, 103, 104, 105 in unmittelbarer Umgebung des Roboters, erfasst. Das Bildverarbeitungsverfahren 80 liefert beispielsweise Informationen über die Anzahl, die Position und die Lage der jeweiligen Gegenstände 102, 103, 104, 105, wobei diese Informationen zur Steuerung des Roboters herangezogen werden.

Bei der Bewertung und Überprüfung des Bildverarbeitungsverfahrens 80 sollen möglichst viele Spezialfälle, Eventualitäten und kritische Situationen überprüft werden, sodass gegebenenfalls Schwachstellen des Bildverarbeitungsverfahrens 80 aufgedeckt werden. Für diesen Zweck werden Testdatensätze 50 in Form von Abbildern 5 und jeweils zugeordneten Vergleichswerten 4 automatisch generiert. Es soll dabei sowohl möglich sein, ein Maß 8 für die Zuverlässigkeit des jeweiligen Bildverarbeitungsverfahrens 80 anzugeben, als auch dieses Ziel mit einer möglichst geringen Anzahl von Testdatensätzen 50 gesammelt als Testdatenbank 70 zu erreichen. Das Verfahren 90, welches durch Vergleich der Ergebnisse 7 des Bildverarbeitungsverfahrens 80 mit den Vergleichswerten 4 (erwartete Ergebnisse, Sollergebnisse, Ground Truth) Maß 8 ermittelt, ist nicht Bestandteil des Patents.

In einem ersten Schritt wird für das zu prüfenden Bildverarbeitungsverfahren 80 ein Domain-Modell 1 festgelegt, im vorliegenden Ausführungsbeispiel handelt es sich hierbei um ein Modell von bestimmten Küchenräumen, und/oder -gegenständen, ihre Anordnungen sowie Beleuchtung, mit dem Szenen 2 einer Küche erstellbar sind. Je nach Anwendungsfall werden für das Generieren von Testdatensätzen 50 die Menge von in der jeweiligen Szene 2 befindlichen Gegenständen 102, 103, 104, 105 sowie die Umgebung, beispielsweise in Form eines Innenraums 101, festgelegt.

Im vorliegenden Fall wird eine Anzahl von möglichen Innenräumen 101 für mögliche Küchen vorgegeben, in denen sich ein Küchenroboter typischerweise bewegt. Innenräume für Küchen können vielfältig und verschieden sein, sodass eine Vielzahl unterschiedlicher möglicher Innenräume 101 in Betracht kommt. Weiters können sich im Innenraum 101 unterschiedliche Gegenstände 102, 103, 104, 105 befinden, die typischerweise in einer Küche zu finden sind, beispielsweise Flaschen 105, Gläser Tassen 104, Obst, Küchenschränke, Stühle und Tische 102. Auch die Anordnung der Gegenstände 102, 103, 104, 105 in Bezug auf den Innenraum 101 sowie der Gegenstände 102, 103, 104, 105 zueinander unterliegt typischerweise gewissen Regelmäßigkeiten. So können Gegenstände 102, 103, 104, 105 etwa nicht in der Luft schweben sondern liegen jeweils auf anderen Gegenständen oder auf dem Boden. Insofern gibt das Domain-Modell Zwangsbedingungen vor, die bei der Erstellung einer Szene einzuhalten sind.

Auch die Form des Innenraums 101 unterliegt gewissen Beschränkungen. So könnte beispielsweise das Domain-Modell 1 ausschließlich rechteckige Innenräume 101 vorschreiben in denen sich zwingend ein Tisch 102 befindet, wobei sich auf dem Tisch 102 bestimmte Haushalts-Gegenstände wie Tassen 104 und Flaschen 105 befinden. Durch das Modell 1 wird ferner festgelegt, welche Gegenstände 102, 103, 104, 105 sich überhaupt in der Szene 2 befinden können. Durch die Angabe von Parametern 6 kann die Größe, das Aussehen und gegebenenfalls die Anzahl der Gegenstände 102, 103, 104, 105 festgelegt werden.

Das beschriebene Domain-Modell 1 bietet die Möglichkeit, unter Angabe von Parametern 6 dreidimensionale Szenen 2 zu erstellen. Ein Satz von angegebenen Parametern 6 legt konkret eine Szene 2 fest. Beispielsweise wird festgelegt, wie viele Gegenstände 102, 103, 104, 105 einer bestimmten Art in der Szene 2 enthalten sind, wie diese ausgerichtet sind und wo sich die Gegenstände 102, 103, 104, 105 befinden. Weiters kann durch Parameter 6 die Form des Innenraums 101 festgelegt werden. Weitere Parameter 6 dienen dazu, die genaue Position und Sehrichtung des Betrachters 120 festzulegen. Die Festlegung der einzelnen Parameter 6 führt dazu, dass aus der Menge aller möglichen Szenen 2, die im Rahmen des Domain-Modells 1 erstellbar sind, eine konkrete Szene 2 ausgewählt wird und dass ein Betrachter 120 in der jeweiligen Szene 2 angeordnet wird.

Nach der Festlegung der Parameter 6 wird mit dem Domain-Modell 1 eine dreidimensionale Szene 2, in der ein Betrachter 120 angeordnet ist, durch Instanzüerung 10 erstellt. Mithilfe von Rendering-Algorithmen 40 ist es nach der Festlegung der Parameter 6 und der Erstellung der Szene 2 möglich, die Szene 2 abzubilden und ein virtuelles Abbild 5 der Szene 2 zu erstellen.

Typischerweise liefert das Domain-Modell 1 bei Angabe der Parameter 6 ein Oberflächenmodell der Szene, wie in **Fig. 5** dargestellt, das durch Polygone 201 beschrieben ist. Die gesamte Oberfläche der Szene 2 kann so beispielsweise durch Polygone 201 in Form von Dreiecken beschrieben werden, die in Form eines Gitternetzes aneinander anliegen.

Die Parameter 6 des Domain-Modells 1 werden im Zuge der Instantüerung 10 mit konkreten Werten versehen, das Domain-Modell 1 liefert unter Zugrundelegung dieser Parameter 6 eine konkrete Szene 2. Als Parameter 6 werden, wie bereits voranstehend erwähnt, auch die Position des Betrachters 120 sowie die Blickrichtung des Betrachters 120 gezählt.

Im konkreten Fall wird bei der Instanzüerung 10 eine konkrete Raumgröße und Raumform des Innenraums 101 sowie eine konkrete Anordnung der Gegenstände 102, 103, 104, 105 festgelegt, beispielsweise ein Innenraum 101 mit einer Grundfläche von 2m x 3m, wobei in der Mitte der runde Tisch 102 steht. Auf dem Tisch 102 befinden sich die Flasche 105 und die Tasse 104, deren Anzahl, Lage und Position durch die Parameter 6 wie folgt vorgegeben sind: Auf der nördlichen Seite der Tischplatte 103 des Tischs 102 steht eine Tasse 104 und auf der westlichen Seite eine Glasflasche 105. Die Position des Betrachters 120 befindet sich gegenüber dem Tisch 102, sodass dieser die Tischplatte 103 des Tischs 102 vollständig sieht und auch die auf der Tischplatte 103 befindlichen Gegenstände 104, 105.

Aus einem Katalog sogenannter "Kritikalitäten" - speziellen Konstellationen oder Erscheinungen welche bekannter Maßen die Ausgabequalität von bildverarbeitenden Verfahren reduzieren können (wie z.B. Spiegelungen, periodische Muster oder gegenseitige Abdeckung von Gegenständen) - wird der Grundstock an für die gegebene Anwendung relevanten Situationen oder Kritikalitäten ausgewählt. In diesem Beispiel werden etwa Probleme mit Transparenz beachtet, da ein Hauptaugenmerk der Anwendung das Erkennen von Glasflächen ist.

Im nächsten Schritt werden auf einigen Punkten der Oberflächen Charakterisierungspunkte 202 verteilt. Diese Charakterisierungspunkte 202 dienen als Abtastpunkte und sollen in späteren Verfahrensschritten 20 eine statistische Auswertung der Sichtbarkeit des jeweiligen Gegenstands 102, 103, 104, 105 in einem gerenderten Abbild 5 der jeweiligen Szene 2 ermöglichen.

In diesem besonderen Ausführungsbeispiel der Erfindung werden unter den Eckpunkten der Dreiecke 201 des Oberflächenmodells einzelne Charakterisierungspunkte 202 ausgewählt. Ein Eckpunkt eines Dreiecks 201 wird bevorzugt dann als Charakterisierungspunkt 202 ausgewählt, wenn er sich auf einer Kante eines Gegenstands 102, 103, 104, 105 befindet. Um dies zu erreichen, können Punkte gewählt werden, an denen die Oberfläche eine starke Krümmung aufweist. Weiters können Charakterisierungspunkte 202 an Orten mit signifikanten Kontrastkanten in der Textur, also beispielsweise im Bereich von Maserungen oder Fußbodenmustern gewählt werden. Schließlich können Charakterisierungspunkte 202 auch auf homogenen Flächen angeordnet werden, wobei die Charakterisierungspunkte 202 derart über die Fläche verteilt sind, dass der sichtbare Oberflächenanteil des jeweiligen Gegenstands 102, 103, 104, 105 proportional zur Anzahl von sichtbaren Charakterisierungspunkten 202 ist. Möglichkeiten, Charakterisierungspunkte 202 auf diese Weise auf einer Oberfläche zu verteilen, sind beispielsweise in [Jiri Matousek; "Geometric Discrepancy: An Illustrated Guide (Algorithms and Combinatorics)"; Springer 2010; ISBN: 3642039413] beschrieben. Je nach ihrer Art wird den Charakterisierungspunkten 202 jeweils ein Attribut zugewiesen. Beispielsweise wird den auf dem Tisch 102 befindlichen Charakterisierungspunkten 202 jeweils ein Attribut "Tisch" zugewiesen, den auf der Flasche 105 befindlichen Charakterisierungspunkten 202 das Attribut "Flasche" usw. Hierdurch ist für jeden der Charakterisierungspunkte 202 bekannt, auf welcher Art von Gegenstand oder auf welchem konkreten Gegenstand er sich befindet.

Die folgenden drei Verfahrensschritte 20, 30, 40 (**Fig. 1**) werden unabhängig voneinander durchgeführt. Insbesondere kann die Reihenfolge dieser Verfahrensschritte 20, 30, 40 beliebig festgesetzt sein und es besteht auch die Möglichkeit, dass diese Verfahrensschritte 20, 30, 40 parallelisiert ausgeführt werden. Alle drei Verfahrensschritte 20, 30, 40 benötigen als Eingangswert lediglich die durch die Instantüerung 10 erstellte dreidimensionale Szene 2. Bei diesen Verfahrensschritten handelt es sich um die Erstellung eines Abbilds 5 der Szene 2 durch ein Rendering-Verfahren 40, die Bildung eines Vergleichswerts 4 (Sollergebnis oder Ground Truth) und die Bildung eines Charakterisierungsvektors 3. Nach der Erstellung werden sämtliche mit diesen Verfahrensschritten ermittelten Ergebnisse, nämlich das Abbild 5, der Vergleichswert 4 und der Charakterisierungsvektor, miteinander verknüpft, beispielsweise in einem gemeinsamen (logischen) Testdatensatz 50 abgespeichert.

Das Abbild 5 der Szene 2 wird mittels eines Rendering-Verfahrens 40 erstellt und für die weitere Verarbeitung durch das Bildverarbeitungsverfahren 80 zur Verfügung gehalten. Es wird eine virtuelle Projektion der Szene 2 generiert und das Verhalten eines Digitalsensors simuliert, der die jeweilige Szene 2 abbildet. Das Abbild 5 der Szene 2 liegt in Form eines Digitalbilds vor.

Auf Grundlage der tatsächlichen Anordnung der einzelnen Gegenstände 102, 103, 104, 105 wird in einem Verfahrensschritt 30 ein Sollergebnis 4 für das zu überprüfende Verfahren, auch Ground-Truth-Wert genannt, erstellt. Dieser Vergleichswert 4 liefert etwa ein sogenanntes Tiefenbild, in dem pro Bildpunkt (Pixel) die Distanz zu dem in diesem Pixel sichtbaren Objekt angegeben ist, oder eine sogenannte Segmentierung, in der alle relevanten Objekte durch eine eigene Farbe charakterisiert werden.

**Fig. 6a****-c** zeigen ein Beispiel: In **Fig. 6a** ist ein mit einer Kamera aufgenommenes Testbild 5 dargestellt, in **Fig. 6b** ist ein Vergleichswert 4 dargestellt, in dem zunehmende Distanz durch zunehmende Helligkeit dargestellt ist, und in **Fig. 6c** ist ein Vergleichswert 4 dargestellt, in dem relevante Objekte durch unterschiedliche Farben gekennzeichnet sind.

Der Vergleichswert liefert die relative Position der Flasche 105 oder der Tasse 104 im Verhältnis zum Betrachter 120 und liefert zudem für einen Test des Bildverarbeitungsverfahrens 80 das zu erzielende Ergebnis. Weicht der vom Bildverarbeitungsverfahren 80 ermittelte Ergebniswert 7 (**Fig. 2**) stark vom jeweiligen Vergleichswert 4 bzw. um mehr als einen vorgegebenen Schwellenwert ab, so kann davon ausgegangen werden, dass das Bildverarbeitungsverfahren 80 zumindest für den vorliegende Testfall nicht hinreichend gut funktioniert.

Um zu verhindern, dass sehr ähnliche Abbilder einer Szene 2 mehrfach erstellt und zum Test des jeweiligen Bildverarbeitungsverfahrens 80 herangezogen werden, wird für jede Szene 2 jeweils ein Charakterisierungsvektor 3 erstellt, wobei ein Beispiel für dessen Ermittlung nachstehend beschrieben ist. Sind die Charakterisierungsvektoren 3 zweier Szenen 2 sehr ähnlich, insbesondere die euklidische Distanz zwischen den Charakterisierungsvektoren 3 zweier Szenen 2 sehr klein, so kann davon ausgegangen werden, dass die beiden Szenen 2 insgesamt sehr ähnlich sind, sodass eine der beiden Szenen 2 nicht zum Testen des Bildverarbeitungsverfahrens 80 benötigt wird, da beide Szenen 2 gleichsam denselben Testfall abdecken.

Um den Charakterisierungsvektor 3 in einem Verfahrensschritt 20 zu ermitteln, wird basierend auf der dreidimensionalen Szene 2 ermittelt, wie viele Charakterisierungspunkte 202 auf einem Gegenstand 102, 103, 104, 105 für den Betrachter 120 sichtbar sind und folglich auch im Abbild 5 der Szene 2 abgebildet sind.

Aufgrund der Zuordnung eines bestimmten Attributs können die Charakterisierungspunkte 202 einer bestimmten Kategorie zugewiesen werden. So zählen alle Charakterisierungspunkte 202, denen das Attribut "Tisch" zugewiesen ist, zur Kategorie "Tisch" usw. Es werden alle im Abbild 5 der Szene 2 sichtbaren Charakterisierungspunkte 202 ermittelt und je nach Kategorie, beispielsweise Innenraum 101, Tisch 102, Tasse 104, Glasflasche 105, zu der diese gehören, eingeteilt. Für jede Kategorie wird der Anteil der sichtbaren Charakterisierungspunkte 202, gemessen an der Gesamtzahl der Charakterisierungspunkte 202 der jeweiligen Kategorie, ermittelt. So sind beispielsweise im vorliegenden Abbild (**Fig. 4**) 15 % derjenigen Charakterisierungspunkte 202 sichtbar, die auf dem Innenraum 101 zugeordneten Dreiecken 201 der Szene 2 angeordnet sind. Weiters sind 50% der Charakterisierungspunkte 202 sichtbar, die auf dem Tisch 102 zugeordneten Dreiecken 201 angeordnet sind. Weiters sind 75% aller Charakterisierungspunkte 202 sichtbar, die auf der Glasflasche 105 zugeordneten Dreiecken 201 angeordnet sind, und 50% aller Charakterisierungspunkte 202 sichtbar, die auf der Tasse 104 zugeordneten Dreiecken 201 angeordnet sind. Insgesamt ergibt sich aus diesen Werten ein Charakterisierungsvektor (0.15, 0.5, 0.75, 0.5).

In diesem Beispiel wird angenommen, dass als Vergleichswert 4 die Fläche der Glasflasche in jedem Testbild verwendet wird. Zu diesem Zweck wird ein virtuelles Kamerabild generiert, welches eine Aufsicht auf die Tischplatte zeigt. Für den späteren Ergebnis-Vergleich wird ein Maskierungsbild erstellt, welches überall schwarz ist, nur diejenigen Pixel weiß hat, welche im Farbbild die Glasflasche darstellen.

Das Abbild 5, der Vergleichswert 4 sowie der Charakterisierungsvektor 3 werden gemeinsam in einem Datensatz 50 abgespeichert, der Datensatz 50 wird in einer Datenbank 70 abgelegt. Dabei wird nur der logische, nicht aber der physische Zusammenhang dieser Daten gefordert.

Um zu verhindern, dass zu viele Abbilder 5 mit annähernd gleichem Inhalt erstellt werden, wird der Charakterisierungsvektor 3 mit den bereits erstellten Charakterisierungsvektoren 3 vorangehender Datensätze 50 verglichen, wobei der Unterschied zu diesen Charakterisierungsvektoren 3 - beispielsweise in Form einer euklidischen Norm der Differenz der Charakterisierungsvektoren 3 - ermittelt wird. Sind zwei Charakterisierungsvektoren 3 zu ähnlich, d. h. weisen zwei Charakterisierungsvektoren 3 eine Differenz auf, die einen vorgegebenen Schwellenwert unterschreitet, so kann einer der beiden Datensätze 50 verworfen werden.
Alternativ kann am Ende des Aufbauens der Testdatenbank 70, statt Testdatensätze 50 zu verwerfen, zunächst alle gesammelt und innerhalb des Charakterisierungsvektorraums eine Auswahl an repräsentativen Testdaten gemäß der Abstandsnormen gewählt werden. Hierzu werden die Charakterisierungsvektoren 3 in Ansammlungshaufen zusammengefasst mit dem Ziel, möglichst wenige Haufen mit dem halben Schwellenwert als Radius zu benötigen. Die Testdaten, deren Charakterisierungsvektoren jeweils den Schwerpunkten dieser Ansammlungshaufen im Charakterisierungsvektorraum am nächsten liegen, werden schließlich als repräsentative Testdaten herangezogen.

Im vorliegenden Fall haben die Charakterisierungsvektoren 202 die Werte (0.1, 0.4, 0.7, 0.3), (0.2, 0.5, 0.4, 0.6) und (0.1, 0.2, 0.6, 0.1). Der jeweilige Euklidische Abstand aller Charakterisierungsvektoren 202 zum neuen Charakterisierungsvektor 202 ist größer als der vorgegebene, gewählte Schwellwert von 0.001, sodass der Datensatz 50 nicht verworfen und für die Prüfung des Bildverarbeitungsverfahrens 80 zur Verfügung gehalten wird.

Die vorliegende bevorzugte Ausführungsform der Erfindung sieht einen Rückkoppelungsschritt 60 vor, der basierend auf dem erzielten Charakterisierungsvektor 3 die Parameter 6 für die Erstellung eines neuen Datensatzes 50 derart abändert, dass ein neuer Datensatz 50 mit einem Abbild 5, einem Vergleichswert 4 und einem Charakterisierungsvektor 3 erstellt wird, wobei der Charakterisierungsvektor 3 des neuen Datensatzes 50 möglichst unterschiedlich zu den bisher ermittelten Charakterisierungsvektoren 3 ist, und aufgrund der Anwendung der geänderten Parameter 6 durch Instanziierung 10 auf das Domain-Model sichergestellt wird, dass damit eine weitere domänenrelevante Szene erstellt wird.

Im vorliegenden Fall ist insbesondere der gegenseitige Abstand aller bisher erzielten Charakterisierungsvektoren 3 relativ gering und liegt im Bereich zwischen 0.1 und 0.2. Um diesen Wert zu vergrößern wird beispielsweise bei der nächstfolgenden Instanziierung 10 des Domain-Modells 1 der Betrachter 120 an eine andere Stelle versetzt und der Blickwinkel geändert, sodass eine große Fläche des Innenraumes 101 zu sehen ist. Beispielsweise kann der Betrachter 120 gerade nach unten sehen, wobei der Boden unterhalb des Betrachters 120 sowie die Beine des Tischs 102 abgebildet werden.

Alternativ kann auch der Tisch 102 aus der Szene 2 entfernt werden oder auf eine andere Stelle innerhalb der Szene 2 gesetzt werden, sodass ein möglichst großer Teil des Innenraums 101 sichtbar im Abbild 5 sichtbar wird.

Automatisiert geschieht dies dadurch, dass diese Parameter 6 als Achsen eines vieldimensionalen Parameterraums aufgefasst werden, in dem jede Szene 2 durch einen Punkt repräsentiert wird. Der Rückkopplungsschritt 60 ordnet die euklidischen Abstände der Charakterisierungsvektoren 3 den Abständen der entsprechenden Punkte in diesem Parameterraum zu und ermittelt daraus einen Punkt im Parameterraum, der mit hoher Wahrscheinlichkeit den gewünschten (großen) Abstand des dazugehörenden Charakterisierungsvektor 3 von den bisherigen erzielt.

In **Fig. 7** ist ein Detail einer alternativen Ausführungsform der Erfindung näher dargestellt. Hierbei wird auf die in **Fig. 2** dargestellte Ausführungsform Bezug genommen, wobei in **Fig. 7** eine Alternative des in **Fig. 2** strichliert berandeten Bereichs dargestellt ist.

Anstelle des softwaremäßig durchgeführten Bildverarbeitungsalgorithmus 80 oder Bildverarbeitungsverfahrens 80 wird im vorliegenden Ausführungsbeispiel der Erfindung ein Sensor 91 eingesetzt, dem die erstellten digitalen Abbilder 5 zugeführt sind. Im vorliegenden Ausführungsbeispiel wird der Sensor 91, der das Bildverarbeitungsverfahren bzw. den Bildverarbeitungsalgorithmus 80 umsetzt, geprüft. Der Sensor 91 weist einen Eingabeteil 94 auf, der insbesondere als Digitalkamera ausgeführt ist.

Die digitalen Abbilder 5 werden mit einem Bildschirm 51 dargestellt, der dem Eingabeteil 94 bzw. der Kamera zugeordnet ist. Über den Eingabeteil 94 erhält der Sensor 91 laufend die vom Bildschirm 51 erstellten digitalen Abbilder 5. Die digitalen Abbilder 5 werden dem Bildverarbeitungsalgorithmus 80 und/oder -verfahren 80 zugeführt.

Um an den Sensor 91 Testdaten in Form von digitalen Abbildern 5 direkt zu übermitteln, besteht alternativ auch die Möglichkeit, dass dem Bildverarbeitungsalgorithmus 80 oder - verfahren 80 digitale Abbilder 5 mittels einer Testeingabeschnittstelle 93 zugeführt werden.

Die digitalen Abbilder 5 werden in einem lokalen Speicher als interne Darstellungen 92 der digitalen Abbilder für den Bildverarbeitungsalgorithmus 80 oder das Bildverarbeitungsverfahren 80 zur Verfügung gehalten, der bzw. das basierend auf der internen Darstellung 92 für jedes der digitalen Abbilder 5 und/oder für jeweils eine Gruppe von digitalen Abbildern 5 jeweils ein internes Ergebnis 97 ermittelt.

Der Sensor 91 hält das interne Ergebnis 97 als Ergebnis 98 an seiner Ausgabeschnittstelle 96 bzw. seinem Ausgabeteil 96 zur Verfügung. In vielen Fällen werden das Ergebnis 98 und der Vergleichswert 4 **(****Fig. 2****)** nicht nach denselben Kriterien ermittelt, sodass ein unmittelbarer Vergleich zwischen dem Ergebnis 98 und dem Vergleichswert 4 nicht möglich ist. Dies kann etwa dann der Fall sein, wenn bei der Bildung des internen Ergebnisses eine andere analoge oder digitale Codierung vorgenommen wurde oder aber eine andere Berechnungsvorschrift angewandt wurde. In diesem Fall kann es erforderlich sein, dass das Ergebnis 98 des Sensors 91 mittels eines Umwandlungsverfahrens 99 in eine mit dem Vergleichswert 4 vergleichbare Form umgewandelt wird.
Alternativ ist es auch möglich, dass der Sensor 91 eine Testausgabeschnittstelle 95 aufweist, die aus dem Ergebnis 97 direkt den Ergebniswert 7 ermittelt, der nach derselben Maßgabe gebildet wird wie der Ergebniswert. Das Ergebnis 97 wird über eine Testausgabeschnittstelle 95 für weitere Verarbeitungsschritte als Ergebniswert 7 zur Verfügung gehalten.

## Patentansprüche

1. Verfahren zum Erstellen von Testdatensätzen (50) zur Prüfung eines Bildverarbeitungsalgorithmus und/oder -verfahrens (80) zur Eignung für eine bestimmte Anwendung (Domäne), wobei das zu untersuchende Bildverarbeitungsverfahren und/oder der zu untersuchende Bildverarbeitungsalgorithmus (80) zur Ermittlung von Ergebniswerten (7) aus Digitalbildern ausgebildet ist, wobei
a) ein Domain-Modell (1) festgelegt wird, mit dem anhand einer Anzahl von vorgebbaren Parametern (6) für die Zielanwendung typische dreidimensionale Szenen (2) festlegbar sind,
b) durch Festlegung von Parametern (6) des Domain-Modells (1) dreidimensionale Szenen (2) erstellt werden, wobei für jede der Szenen (2) die Position und Sehrichtung eines Betrachters (120) in Bezug auf die jeweilige dreidimensionale Szene (2) einen weiteren Parameter (6) darstellt, der gemeinsam mit den übrigen Parametern (6) für die jeweilige Szene (2) festgelegt wird,
c) mittels eines Rendering Verfahrens (40) ausgehend von der Position und Ausrichtung des Betrachters (120) ein digitales Abbild (5) jeder Szene (2) erstellt wird,
d) aus der Szene (2), insbesondere aus den die Szene (2) charakterisierenden Parametern (6), Vergleichswerte (4) ermittelt oder abgeleitet werden,
e) die Vergleichswerte (4) gemeinsam mit den digitalen Abbildern (5) als gemeinsamer Datensatz (50) abgespeichert werden,
**dadurch gekennzeichnet, dass**
f) in der dreidimensionalen Szene (2) enthaltenen Punkte, insbesondere die Eckpunkte der Oberflächenelemente (201), als Charakterisierungspunkte (202) ausgewählt werden,
g) ermittelt wird, ob und/oder wo sich die Charakterisierungspunkte (202) im Sichtbereich des Betrachters (120) befinden, und ein Charakterisierungsvektor (3) erstellt wird, der für eine Anzahl von Kategorien jeweils einen Wert enthält, der angibt, wie viele oder welcher Anteil der jeweiligen Kategorie zugewiesenen Charakterisierungspunkte (202) für den Betrachter (120) sichtbar sind,
h) zu jedem Abbild (5) jeweils der zugehörige ermittelte Charakterisierungsvektor (3) und der jeweils zugeordnete Vergleichswert (4) abgespeichert wird, und dass insbesondere das Abbild (5) gemeinsam mit dem ihm jeweils zugeordneten Charakterisierungsvektor (3) und dem ihm jeweils zugeordneten Vergleichswert (4) in einem gemeinsamen logischen Datensatz (50) abgespeichert werden, die auf Grundlage derselben Szene (2) ermittelt wurden,
i) zwei in logischen Datensätzen (50) abgespeicherte Abbilder (5) als umso ähnlicher angesehen werden, je geringer die Distanz zwischen den jeweils im gleichen logischen Datensatz (50) befindlichen Charakterisierungsvektoren (3) ist, wobei zur Bestimmung der Ähnlichkeit zweier Abbilder (5) eine Distanzmetrik für Charakterisierungsvektoren (3) vorgegeben wird, die vorzugsweise dem euklidischen Abstand der Charakterisierungsvektoren (3) entspricht,
j) aus einer Gruppe von logischen Datensätzen (50) mit ähnlichen Charakterisierungsvektoren (3) derjenige Charakterisierungsvektor (50) ausgewählt wird, dessen Distanz zu den übrigen Charakterisierungsvektoren (3) am geringsten ist und die übrigen Charakterisierungsvektoren (3) verworfen werden,
k) auf Grundlage des ermittelten Charakterisierungsvektors (3) die dem Domain-Modell (1) übermittelten Parameter (6) abgeändert werden, um eine hinreichende Abdeckung des Raums der Charakterisierungsvektoren (3) zu erzielen, und dass die Erstellung einer Szene (2) mit dem abgeänderten Satz von Parametern (6) erneut durchgeführt wird, wobei dieser Vorgang so lange wiederholt wird, bis eine Verteilung der ermittelten Charakterisierungsvektoren (3) im Vektorraum der Charakterisierungsvektoren (3) so erreicht wird, dass jeder weiterer Satz von Parametern (6) zu einem Charakterisierungsvektor (3) führen würde, der von keinem der bisher ausgewählten Charakterisierungsvektoren entsprechend der gewählten Distanzmetrik so weit entfernt ist, dass er gemäß Schritt j) nicht verworfen werden würde.

2. Verfahren nach Anspruch 1, **dadurch gekennzeichnet, dass** das Bildverarbeitungsverfahren (80) und/oder der Bildverarbeitungsalgorithmus (80) auf die erstellten digitalen Abbilder (5) angewendet wird, wobei das Bildverarbeitungsverfahren (80) und/oder der Bildverarbeitungsalgorithmus (80) aus den digitalen Abbildern (5) eine Anzahl von Ergebniswerten (7) ableitet und die Ergebniswerte (7) mit den gemeinsam mit dem jeweiligen digitalen Abbild (5) abgespeicherten Vergleichswerten (4) verglichen werden, wobei das Bildverarbeitungsverfahren (80) und/oder der Bildverarbeitungsalgorithmus (80) bei Abweichungen zwischen dem Ergebniswert (7) und dem Vergleichswert (4) als fehlerhaft detektiert wird.

3. Verfahren nach Anspruch 2 zur Prüfung eines Sensors (91), **dadurch gekennzeichnet, dass** das Bildverarbeitungsverfahren (80) und/oder der Bildverarbeitungsalgorithmus (80) von einem Sensor (91) ausgeführt wird, wobei
- der Sensor (91), insbesondere laufend, digitale Abbilder (5) erfasst und dem Bildverarbeitungsverfahren (80) und/oder Bildverarbeitungsalgorithmus (80) als sensor-interne Darstellungen (92) zur Verfügung stellt, und
- der Sensor (91) Ergebniswerte (97) des Bildverarbeitungsverfahrens (80) und/oder Bildverarbeitungsalgorithmus (80) als Ergebniswerte (7) zur Verfügung stellt.

4. Verfahren nach Anspruch 3, **dadurch gekennzeichnet, dass** die digitalen Abbilder (5) mittels einer Testeingabeschnittstelle (93) als Eingabe für das Bildverarbeitungsverfahren (80) und/oder den Bildverarbeitungsalgorithmus (80) übermittelt werden und/oder,
dass die digitalen Abbilder (5), insbesondere bei fehlender Testeingabeschnittstelle (93), über einen dem Eingabeteil (94) des Sensors (91) zugewandtem Bildschirm (51) als Eingabe für das Bildverarbeitungsverfahren (80) und/oder dem Bildverarbeitungsalgorithmus (80) übermittelt werden.

5. Verfahren nach Anspruch 3 oder 4, **dadurch gekennzeichnet, dass** die Ergebniswerte (7) mittels einer Testausgabeschnittstelle (95) zur Verfügung gestellt werden und/oder,
dass die Ergebniswerte (7), insbesondere bei fehlender Testausgabeschnittstelle (95), mittels eines Umwandlungsverfahrens (99) aus den Ergebnissen (98) des Bildverarbeitungsverfahrens (80) und/oder des Bildverarbeitungsalgorithmus (80) abgeleitet werden, wobei die Ergebnisse (97) über den Ausgabeteil (96) des Sensors (91) für das Umwandlungsverfahren (99) bereitgehalten werden.

6. Verfahren nach einem der vorangehenden Ansprüche, **dadurch gekennzeichnet, dass** im Zuge der Festlegung der Szene (2) ein Oberflächenmodell der Szene (2) erstellt wird, wobei die Szene (2) durch eine Anzahl von Raumpunkten festgelegt wird, die miteinander durch Oberflächenelemente, insbesondere durch Polygone (201), vorzugsweise in Form von Dreiecken, verbunden sind.

7. Verfahren nach einem der vorangehenden Ansprüche, **dadurch gekennzeichnet, dass**
- den Charakterisierungspunkten (202) Attribute hinzugefügt werden, die die Art des Gegenstands (102, 103, 104, 105) angeben, auf dem sich der jeweilige Charakterisierungspunkt (202) befindet.

8. Verfahren nach einem der vorangehenden Ansprüche, **dadurch gekennzeichnet, dass** die Parameter (6) derart gewählt werden, dass für die Zielanwendung kritische Konstellationen oder Kritikalitäten oder Erscheinungen, wie beispielsweise Spiegelungen oder periodische Muster, welche die Ausgabequalität von bildverarbeitenden Algorithmen reduzieren können, abgedeckt werden.

9. Datenträger, auf dem ein Computerprogramm zur Durchführung eines Verfahrens nach einem der Ansprüche 1 bis 9 abgespeichert ist.

## Claims

1. Method for generating test data sets (50) for testing an image processing algorithm and/or method (80) for suitability for a defined application (domains), wherein the image processing method to be examined and/or the image processing algorithm (80) to be examined is designed for determining result values (7) from digital images, wherein
a) a domain model (1) is established with which typical three-dimensional scenes (2) can be established on the basis of a plurality of predeterminable parameters (6) for the target application,
b) three-dimensional scenes (2) are generated by establishing parameters (6) of the domain model (1), wherein for each of the scenes (2) the position and viewing direction of a viewer (120) in relation to the three-dimensional scene (2) represents a further parameter (6), which is established together with the remaining parameters (6) for the scene (2),
c) a digital image (5) of each scene (2) is generated by means of a rendering method (40) proceeding from the position and orientation of the viewer (120),
d) from the scene (2), in particular from the parameters (6) characterising the scene (2), comparison values (4) are determined or derived,
e) the comparison values (4) are stored together with the digital images (5) as a common data set (50),
**characterised in that**
f) points contained in the three-dimensional scene (2), in particular the corner points of the surface elements (201), are selected as characterisation points (202),
g) it is determined whether and/or where the characterisation points (202) are in the range of sight of the viewer (120), and a characterisation vector (3) is generated, which contains a value in each case for a plurality of categories, said value specifying how many or what proportion of the characterisation points (202) assigned to the category are visible to the viewer (120),
h) the associated determined characterisation vector (3) in each case and the associated comparison value (4) in each case are stored for each image (5), and that in particular the image (5) together with the characterisation vector (3) associated with said image in each case and the comparison value (4) associated with said image in each case are saved in a common logical data set (50), which have been determined on the basis of said scene (2),
i) two images (5) stored in logical data sets (50) are considered more similar, the smaller the distance is between the characterisation vectors (3) located in the same logical data set (50), wherein to determine the similarity of two images (5) a distance metric is predetermined for characterisation vectors (3), which corresponds to the Euclidean distance of the characterisation vectors (3),
j) the same characterisation vector (50), the distance of which to the remaining characterisation vectors (3) is the smallest, is selected from a group of logical data sets (50) comprising similar characterisation vectors (3), and the remaining characterisation vectors (3) are discarded,
k) on the basis of the determined characterisation vector (3), the parameters (6) transmitted to the domain model (1) are modified in order to achieve a sufficient coverage of the space of the characterisation vectors (3), and that a scene (2) with the modified set of parameters (6) is generated again, wherein said procedure is repeated so long until a distribution of the determined characterisation vectors (3) in the vector space of the characterisation vectors (3) is achieved such that each further set of parameters (6) would lead to a characterisation vector (3), which according to the chosen distance metric is not so far from any of the previously selected characterisation vectors that said characterisation vector would not be discarded according to step j).

2. A method according to claim 1, **characterised in that** the image processing method (80) and/or the image processing algorithm (80) is applied to the generated digital images (5), wherein the image processing method (80) and/or the image processing algorithm (80) derives a plurality of result values (7) from the digital images (5) and the result values (7) are compared with comparison values (4) stored together with the digital image (5), wherein the image processing method (80) and/or the image processing algorithm (80) is detected as faulty in the case of deviations between the result value (7) and the comparison value (4).

3. A method according to claim 2 for testing a sensor (91), **characterised in that** the image processing method (80) and/or the image processing algorithm (80) is executed by a sensor (91), wherein
- the sensor (91), in particular continuously, detects digital images (5) and provides same to the image processing method (80) and/or image processing algorithm (80) as sensor-internal representations (92), and
- the sensor (91) provides result values (97) of the image processing method (80) and/or image processing algorithm (80) as result values (7).

4. A method according to claim 3, **characterised in that** the digital images (5) are transmitted by means of a test input interface (93) as input for the image processing method (80) and/or the image processing algorithm (80) and/or,
that the digital images (5), in particular in the absence of a test input interface (93), are transmitted via a display screen (51) facing the input part (94) of the sensor (91) as input for the image processing method (80) and/or the image processing algorithm (80).

5. A method according to claim 3 or 4, **characterised in that** the result values (7) are provided by means of a test output interface (95) and/or,
the result values (7), in particular in the absence of a test output interface (95), are derived by means of a conversion method (99) from the results (98) of the image processing method (80) and/or the image processing algorithm (80), wherein the results (97) are kept via the output part (96) of the sensor (91) for the conversion method (99).

6. A method according to any one of the preceding claims, **characterised in that** in the course of establishing the scene (2) a surface model of the scene (2) is generated, wherein the scene (2) is established by a plurality of spatial points, which are connected to each other by surface elements, in particular by polygons (201), preferably in the form of triangles.

7. A method according to any one of the preceding claims, **characterised in that**
- attributes are added to the characterisation points (202), said attributes specifying the type of object (102, 103, 104, 105) on which the characterisation point (202) is located.

8. A method according to any one of the preceding claims, **characterised in that** the parameters (6) are chosen such that for the target application critical constellations or criticalities or phenomena, such as reflections or periodic patterns which can reduce the output quality of image-processing algorithms, are covered.

9. A data carrier on which a computer program is stored for carrying out a method according to any one of claims 1 to 9.

## Revendications

1. Procédé pour établir des jeux de données d'essai (50) pour vérifier si un algorithme et/ou un procédé de traitement d'image (80) conviennent à une certaine utilisation (domaine), le procédé de traitement d'image à étudier et/ou l'algorithme de traitement d'image à étudier (80) étant conçus pour déterminer des valeurs de résultat (7) à partir d'images numériques, dans lequel
a) on spécifie un modèle de domaine (1), avec lequel, à l'aide d'un certain nombre de paramètres prédéfinissables (6), il est possible de spécifier des scènes tridimensionnelles (2) typiques de l'utilisation cible,
b) par spécification de paramètres (6) du modèle de domaine (1), on établit des scènes tridimensionnelles (2), auquel cas, pour chacune des scènes, la position et la direction du regard d'un observateur (120) représentent, par rapport à la scène tridimensionnelle (2) considérée, un paramètre supplémentaire (6), qui conjointement aux autres paramètres (6) est spécifié pour la scène considérée (2),
c) à l'aide d'un procédé de rendu (40), à partir de la position et de l'orientation de l'observateur (120), on établit une image numérique (5) de chaque scène (2),
d) à partir de la scène (2), en particulier des paramètres (6) qui caractérisent la scène (2), on détermine ou on déduit des valeurs comparatives (4),
e) on stocke les valeurs de mesure (4), conjointement aux images numériques (5), en tant que jeu de données commun (50),
**caractérisé en ce que**
f) des points contenus dans la scène tridimensionnelle (2), en particulier les sommets des éléments de surface (201), sont sélectionnés en tant que points de caractérisation (202),
g) on détermine si et/ou où les points de caractérisation (202) se trouvent dans le champ de vision de l'observateur (120), et on établit un vecteur de caractérisation (3), qui contient pour chacune d'un certain nombre de catégories une valeur qui indique combien, ou quelle proportion des points de caractérisation (202) affectés à la catégorie considérée, sont visibles par l'observateur (120),
h) pour chaque image (5), on stocke le vecteur de caractérisation déterminé correspondant (3) et la valeur comparative affectée (4), et **en ce qu'**en particulier l'image (5) est, conjointement au vecteur de caractérisation qui lui est affecté (3) et à la valeur comparative qui lui est affectée (4), stockées dans un jeu de données logique commun (50), qui ont été déterminées sur la base de la même scène (2),
i) deux images (5) stockées dans les jeux de données logiques (50) sont considérées comme d'autant plus semblables qu'est plus petite la distance entre les vecteurs de caractérisation (3) qui se trouvent dans le même jeu de données logiques (50), auquel cas, pour la détermination de la similitude de deux images (5), on prédéfinit une métrique de distance pour les vecteurs de caractérisation (3), qui de préférence correspond à la distance euclidienne entre les vecteurs de caractérisation (3),
j) dans un groupe de jeux de données logiques (50) ayant des vecteurs de caractérisation semblables (3), on sélectionne le vecteur de caractérisation (50) dont la distance aux autres vecteurs de caractérisation (3) est la plus faible, et on rejette les autres vecteurs de caractérisation (3),
k) sur la base du vecteur de caractérisation déterminé (3), on modifie les paramètres (6) transmis au modèle de domaine (1), pour réaliser une couverture suffisante de l'espace des vecteurs de caractérisation (3), et **en ce que** l'établissement d'une scène (2) est de nouveau mis en oeuvre avec le jeu modifié de paramètres (6), ce processus étant répété jusqu'à ce que l'on atteigne une répartition des vecteurs de caractérisation déterminés (3) dans l'espace vectoriel des vecteurs de caractérisation (3), de telle sorte que chaque jeu supplémentaire de paramètres (6) conduise à un vecteur de caractérisation (3) qui ne soit , d'une manière correspondant à la métrique de distance sélectionnée, éloigné des vecteurs de caractérisation jusqu'à maintenant sélectionnés au point qu'il ne serait pas rejeté selon l'étape j).

2. Procédé selon la revendication 1, **caractérisé en ce que** le procédé de traitement d'image (80) et/ou l'algorithme de traitement d'image (80) sont utilisés sur les images numériques établies (5), le procédé de traitement d'image (80) et/ou l'algorithme de traitement d'image (80) déduisant des images numériques (5) un certain nombre de valeurs de résultat (7), et les valeurs de résultat (7) étant comparées aux valeurs de résultat (4) stockées conjointement à l'image numérique correspondante (5), le procédé de traitement d'image (80) et/ou l'algorithme de traitement d'image (80) étant, en cas d'écart entre la valeur de résultat (7) et la valeur comparative (4), détectés comme étant défectueux.

3. Procédé selon la revendication 2 pour la vérification d'un capteur (91), **caractérisé en ce que** le procédé de traitement d'image (80) et/ou l'algorithme de traitement d'image (80) sont mis en oeuvre par un capteur (91),
- le capteur (91) saisissant, en particulier en continu, des images numériques (5), et les mettant à la disposition du procédé de traitement d'image (80) et/ou de l'algorithme de traitement d'image (80) en tant que représentations (92) internes au capteur, et
- le capteur (91) mettant à disposition, en tant que valeurs de résultat (7), des valeurs de résultat (97) du procédé de traitement d'image (80) et/ou de l'algorithme de traitement d'image (80).

4. Procédé selon la revendication 3, **caractérisé en ce que** les images numériques (5) sont transmises à l'aide d'une interface d'entrée d'essai (93) en tant qu'entrée pour le procédé de traitement d'image (80) et/ou l'algorithme de traitement d'image (80), et/ou,
**en ce que** les images numériques (5), en particulier en l'absence d'interface d'entrée d'essai (93), sont par l'intermédiaire d'un écran (51), dirigé vers la partie d'entrée (94) du capteur (91), transmises en tant qu'entrée pour le procédé de traitement d'image (80) et/ou l'algorithme de traitement d'image (80).

5. Procédé selon la revendication 3 ou 4, **caractérisé en ce que** les valeurs de résultat (7) sont mises à disposition à l'aide d'une interface de sortie d'essai (95), et/ou **en ce que** les valeurs de résultat (7), en particulier en l'absence d'interface de sortie d'essai (95), sont à l'aide d'un procédé de conversion (99) déduites des résultats (98) du procédé de traitement d'image (80) et/ou de l'algorithme de traitement d'image (80), les résultats (97) étant tenus en réserve, par la partie sortie (96) du capteur (91), pour le procédé de conversion (99).

6. Procédé selon l'une des revendications précédentes, **caractérisé en ce qu'**au cours de la spécification de la scène (2) est établi un modèle de surface de la scène (2), la scène (2) étant spécifiée par un certain nombre de points spat sélectionnés iaux, qui sont reliés les uns aux autres par des éléments de surface, en particulier par des polygones (201), de préférence sous forme de triangles.

7. Procédé selon l'une des revendications précédentes, **caractérisé en ce que**
- aux points de caractérisation (202) sont ajoutés des attributs qui indiquent la nature de l'objet (102, 103, 104, 105) sur lequel se trouve le point de caractérisation considéré (202).

8. Procédé selon l'une des revendications précédentes, **caractérisé en ce que** les paramètres (6) sont choisis de telle sorte que soient couverts les configurations ou criticités ou phénomènes critiques pour l'utilisation cible, tels que par exemple des reflets ou des motifs périodiques, qui peuvent réduire la qualité de sortie des algorithmes de traitement d'image.

9. Support de données sur lequel est stocké un programme informatique destiné à la mise en oeuvre d'un procédé selon l'une des revendications 1 à 9.
